# EUROPEAN PATENT SPECIFICATION

(11) **EP 2 422 140 B1**
(45) Date of publication and mention of the grant of the patent: **16.03.2016**
(21) Application number: 10720807.6
(22) Date of filing: 16.04.2010
(51) Int. Cl.: F24H 9/20, G05D 23/19, F24D 19/10

(54) **SECONDARY HEATING-SYSTEM-CONTROLLER**
SEKUNDÄRSTEUEREINRICHTUNG EINER HEIZUNGSANLAGE
DISPOSITIF DE COMMANDE DE SYSTÈME DE CHAUFFAGE SECONDAIRE

(30) Priority: 20.04.2009 GB 0906675
(43) Date of publication of application: 29.02.2012
(73) Proprietor: The Chopping Company Limited, Dollar, Clackmannanshire FK14 7DE (GB)
(72) Inventor: STEWART, Garry, Richmond, Dollar, Clackmannanshire FK14 7PT (GB)
(74) Representative: Hocking, Adrian Niall
(86) International application number: PCT/GB2010/050636
(87) International publication number: WO 2010/122328

(56) References cited:
- EP-A1- 0 085 466
- DE-A1- 10 257 611
- FR-A1- 2 318 392
- US-A- 5 337 955

## Description

The present invention relates to a secondary heating-system-controller, a primary heating-system-controller in combination with such a secondary heating-system-controller, a boiler for a heating system having the secondary heating-system-controller onboard, and to a method of reducing utility costs for a heating system by using such a secondary heating-system-controller.

Typically a heating system comprises a gas or oil-fired boiler for heating radiators connected thereto and for supplying hot water to taps. The central heating circuit often relies on a centralised thermostat which acts as a primary controller for turning the boiler on usually two or three times a day. Once the set room temperature is reached, the thermostat turns off the boiler. If the ambient temperature drops back below the temperature set at the centralised thermostat, during an activation period, then the boiler is reactivated.

However, during an activation period, the boiler is put under a long sustained and often continuous demand whilst the radiators on the central heating circuit attempt to raise a room temperature around at least the centralised thermostat to the pre-set required threshold as quickly as possible. Once the centralised thermostat temperature is reached, the boiler is generally programmed to maintain for a period or overshoot this temperature by a certain margin before switching off.

This sustained demand and maintenance / overshoot facility all leads to significantly increased utility usage.

Document EP 0 565 466 discloses a secondary heating-system-controller according to the preamble of claim 1.

The present invention seeks to provide a solution which reduces the amount of a utility supply required for a heating system, without or substantially without impacting a heating effect perceived by a user or occupant.

According to a first aspect of the invention, there is provided a secondary heating-system-controller for use in conjunction with a primary heating-system-controller of a heat supply unit supplying a heating system, wherein the secondary heating-system-controller comprises interruption means for temperature-independently periodically deactivating and reactivating the heat supply unit supplying the heating system during an activation period of the heat supply unit determined by the primary heating-system-controller, the interruption means including a control circuit for activating and deactivating the heat supply unit, a timer for outputting timing signals to the control circuit for an activation period and a deactivation period, a user-interface which interfaces with the timer for a user to set the activation period and the deactivation period, and a primary heating-system-controller input element for receiving a primary heating-system activation signal and a primary heating-system deactivation signal from the primary heating-system-controller.

Preferable and/or optional features of the first aspect of the invention are set forth in claims 2 to 9, inclusive.

According to a second aspect of the invention, there is provided a secondary heating-system-controller in accordance with the first aspect of the invention, in combination with a primary heating-system-controller of a heat supply unit supplying a heating system.

Preferably, the secondary heating-system-controller carries the primary heating-system-controller.

According to a third aspect of the invention, there is provided a boiler for a heating system, the boiler comprising a secondary heating-system controller, in accordance with the first aspect of the invention, which is onboard.

Preferably, the boiler further comprises an onboard boiler controller, the secondary heating-system controller being integral with the boiler controller.

According to a third aspect of the invention, there is provided a method of reducing utility costs for a heating system by using a secondary heating-system-controller in accordance with the first aspect of the invention, the method comprising the step of temperature-independently deactivating and reactivating the heat supply unit supplying a heating system a plurality of times using the interruption means during a standard activation period of the heat supply unit.

The invention will now be more particularly described, by way of example only, with reference to the accompanying drawings, in which :
Figure 1 shows a perspective view of a first embodiment of a secondary heating-system-controller, in accordance with the first aspect of the invention;
Figure 2 shows an exploded view of the secondary heating-system-controller;
Figure 3 shows a perspective view of the secondary heating-system-controller, a primary heating-system-controller, and a mounting plate when spaced apart;
Figure 4 shows the secondary heating-system-controller and the primary heating-system-controller, when connected; and
Figure 5 shows a front view of a second embodiment of the secondary heating-system-controller, in accordance with the first aspect of the invention and when provided onboard a boiler for a heating system.

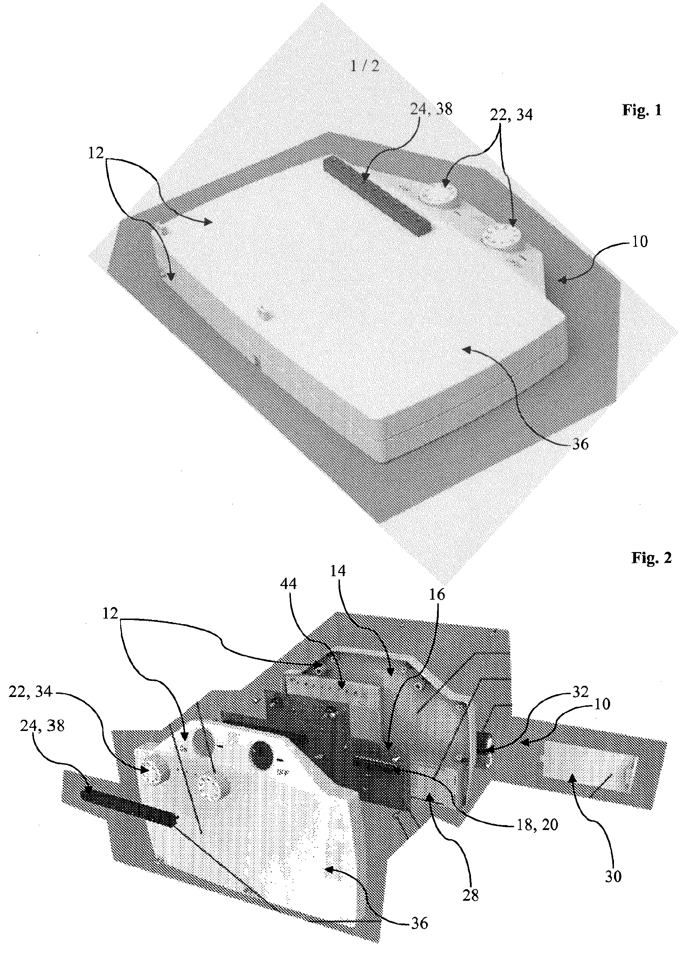

Referring firstly to Figures 1 to 4 of the drawings, there is shown a first embodiment of a secondary heating-system-controller 10 which comprises a, typically moulded plastics, two part housing 12 defining an enclosable cavity 14 therewithin, a PCB 16 mounted in the cavity 14 having a control circuit 18 and a timer 20 thereon, a user interface 22 at a front exterior surface of the housing 12 which is in electrical communication with the timer 20, and a primary heating-system-controller input element 24 for receiving a primary heating-system activation signal and a primary heating-system deactivation signal from a primary heating-system-controller 26.

To energise the secondary heating-system-controller 10, a battery compartment 28 having a removable access cover 30 is provided at a rear of the housing 12. At least one battery 32, preferably being rechargeable, is receivable in the battery compartment 28.

The user interface 22, in this embodiment, comprises two spaced rotary potentiometers 34 provided at or adjacent to an uppermost edge of the housing 12. However, any suitable user interface 22 can be provided, and for example it may be digital and/or electronic with push buttons.

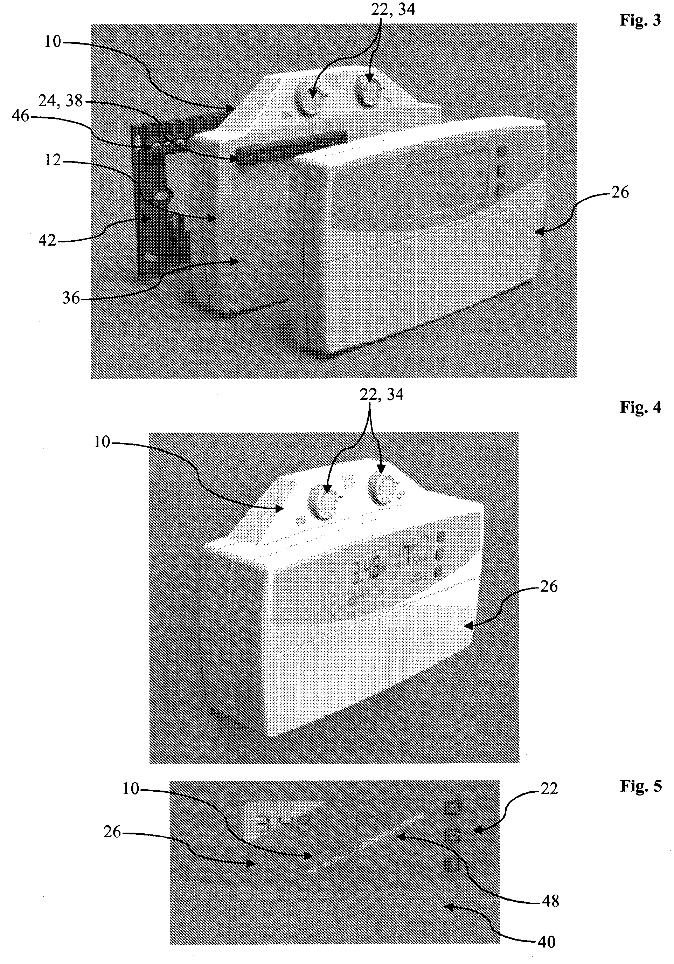

Positioning the user interface 22 towards an upper edge of the housing 12 provide space on the exterior front surface for a support 36. The primary heating-system-controller input element 24 is an electrical connector which also defines an engagement element 38 for releasably engaging the primary heating-system-controller 26. The primary heating-system-controller input element 24 is positioned appropriately as necessity dictates on the support 36 so that the primary heating-system-controller 26 can be in electrical communication with the secondary heating-system-controller 10 whilst being carried in a piggyback manner by the housing 12, as shown in Figure 4.

The primary heating-system-controller input element 24 is effectively an intercept element so that heating system activation and deactivation signals outputted by the primary heating-system-controller 26 are directly inputted to and only to the secondary heating-system-controller 10. The control circuit 18 thus controls a main heating unit 40 of the heating system, typically being a gas or oil-fired boiler, accordingly. In the case of the secondary heating-system-controller 10 receiving an activation signal from the primary heating-system-controller 26, the control circuit 18 activates the main heating unit 40 in a normal manner.

A user utilises the user interface 22 to set the timer 20 to provide an activation timing signal for a predetermined period within a user-selectable range, for example, from 5 minutes to 45 minutes. As an example, the user may select 30 minutes.

The user also utilises the user interface 22 to set the timer 20 to provide a deactivation timing signal for a predetermined period within a user-selectable range, for example, also from 5 minutes to 45 minutes. As an example, the user may select 15 minutes.

The activation timing signal is thus outputted by the timer 20 to the control circuit 18, which thus controls the main heating unit 40 of the heating system to remain on. Following expiry of the user-selected activation period, the timer 20 outputs the deactivation timing signal to the control circuit 18, which thus temperature-independently controls the main heating unit 40 of the heating system to switch off even though a deactivation signal has not yet been sent by the primary heating-system-controller 26. Following expiry of the user-selected deactivation period, the timer 20 again outputs the temperature-independent activation timing signal to the control circuit 18, which thus controls the main heating unit 40 of the heating system to switch on. This process is repeated until the deactivation signal is outputted by the primary heating-system-controller 26 to the primary heating-system-controller input element 24, and the control circuit 18 thus controls the main heating unit 40 of the heating system to turn off.

The secondary heating-system-controller 10 thus utilises the residual heating effect of the heating system, via the already heated water in the system and the heated radiators, to continue supplying heat energy to the environment whilst the main heating unit 40 is switched off for a short period by the secondary heating-system-controller 10. Once switched back on by the activation timing signal being supplied to the control circuit 18, the main heating unit 40 again heats and circulates the heat transfer liquid in the central heating system until the next deactivation timing signal is outputted.

Therefore, although a heating demand placed on the main heating unit 40 may be greater, it is so for a plurality of shorter periods between the output of an activation signal and a deactivation signal from the primary heating-system-controller 26. As a consequence, an actual 'ON' time of the main heating unit 40 is significantly reduced, thus markedly decreasing an amount of utility supply, such as gas or electricity, utilised, and a period of maintenance / overshoot heating is also reduced. Substantial cost savings can thus be obtained by the user without or substantially without any noticeable diminished heating effect, and a reduction in environmentally damaging emissions and carbon footprint can be achieved.

Ideally, the main heating unit 40 will not remain deactivated by the secondary heating-system-controller 10 for too long, otherwise the heat transfer liquid and radiators or other heat transfer devices will undesirably cool too much. This will lead to a user or occupant noticing a lack of heating and the ambient environment around the centralised thermostat or local thermostats struggling to reach the required temperatures in the main activation period provided for by the primary heating-system-controller 26.

Similarly, the main heating unit 40 will, ideally, not remain activated by the temperature-independent secondary heating-system-controller 10 for too long, since a maximum or optimum thermal capacity of the heat transfer liquid and radiators or other heat transfer devices will have been reached and will simply be unnecessarily maintained by the main heating unit 40. This will lead to unnecessary usage of the utility supply.

Thus, it is important for the user or occupant to adjust the timer 20 to best suit their needs.

It is common for the primary heating-system-controller 26 to be spaced from the main heating unit 40. Typically, the primary heating-system-controller 26 includes a main thermostat to regulate the ambient temperature of a particular room. Such a primary heating-system-controller 26 usually includes a mounting plate 42 or bracket which may be hard wired to an onboard controller of the main heating unit 40. In this case, the secondary heating-system-controller 10 includes an electrical connector 44 which enables connection to a connector 46 on the mounting plate 42. The primary heating-system-controller 26 is then releasably mountable to the housing 12 of the secondary heating-system-controller 10 via the primary heating-system-controller input element 24.

Instead of being hard wired, the primary heating-system-controller 26 may be in wireless communication with the onboard controller of the main heating unit 40. In this case, the secondary heating-system-controller 10 may include a wireless receiver and a wireless transmitter. The primary heating-system-controller input element may be dispensed with. A frequency of a wireless transmitter of the primary heating-system-controller 26 is changed to match that of the wireless receiver of the secondary heating-system-controller 10, and a frequency of the wireless transmitter of the secondary heating-system-controller 10 is set to that of the onboard controller of the main heating unit 40. Wireless communication and control via the secondary heating-system-controller 10 is thus possible.

Referring to Figure 5, a second embodiment of the secondary heating-system-controller 10 is shown. In this embodiment, rather than being separate, the secondary heating-system-controller 10 is provided onboard with the onboard controller 48, which may thus be or include the primary heating-system-controller 26, of the main heating unit 40. In this case, it is preferable to integrate the secondary heating-system-controller 10 with the onboard controller 48. However, they may be separate units which communicate with each other.

Although the interruption means described above comprises a control circuit, timer, and primary heating-system-controller input element, it may be feasible to have additional or alternative elements for periodically deactivating and reactivating the heating system during an activation period of the heating system determined by the primary heating-system-controller.

Furthermore, the secondary heating-system controller may include a supplementary controller which enables overriding of the present condition of the secondary heating-system controller. For example, if the secondary heating-system controller has cycled the main heating unit into a temperature-independent deactivation condition, but the environment becomes too cold for the occupant, the supplementary controller can be utilised to reactivate the main heating unit earlier than the set period of the secondary heating-system controller. The supplementary controller may include a wireless remote control unit by which the occupant can control the secondary heating-system controller and, in particular, the override function remotely. The supplementary controller can also be used *vice versa* if the occupant feels the room is too warm.

Preferably, the secondary heating-system controller also includes a thermostat, or makes use of a thermostat of the primary heating-system controller, to override the set period for deactivation of the main heating unit if a room temperature falls below that set by the thermostat, thereby causing automatic reactivation prior to the set period for deactivation expiring. The thermostat mentioned above may be remote from the housing of the secondary heating-system controller, thus communicating wirelessly or by hard wiring, or may be housed therein.

It is thus possible to provide a secondary heating-system-controller for use in conjunction with a primary heating-system-controller of a heating system, which is simple and cost-effective to produce. The secondary heating-system-controller utilises interruption means for intercepting an activation signal and a deactivation signal of the primary heating-system-controller, and during an activation period determined by the primary heating-system-controller temperature-independently controlling the main heating unit to deactivate and reactivate, preferably a plurality of times. It is thus possible to reduce a total 'on' time of the main heating unit during an activation period dictated by the primary heating-system-controller, whilst making use of residual heat within the heat transfer liquid and radiators or other heat transfer devices connected to the main heating unit. Utility costs, along with environmentally damaging emissions, associated with the running of the main heating unit can thus be reduced.

The embodiments described above are provided by way of examples only, and various other modifications will be apparent to persons skilled in the art without departing from the scope of the invention as defined by the appended claims.

## Claims

1. A secondary heating-system-controller (10) for use in conjunction with a primary heating-system-controller (26) of a heat supply unit supplying a heating system, wherein the secondary heating-system-controller (10) comprises interruption means (18, 20) for periodically deactivating and reactivating the heat supply unit supplying the heating system during an activation period of the heat supply unit determined by the primary heating-system-controller (26), the interruption means being for activating and deactivating the heat supply unit, and including a timer (20) for outputting timing signals for an activation period and a deactivation period, and a user-interface which interfaces with the timer (20) for a user to set the activation period and the deactivation period, **characterized in that** the interruption means (18, 20) are for temperature-independently periodically deactivating and reactivating the heat supply unit supplying the heating system during an activation period of the heat supply unit determined by the primary heating-system-controller (26), and **in that** the interruption means include a control circuit (18) for activating and deactivating the heat supply unit, the timer (20) being for outputting the timing signals to the control circuit (18), and **in that** the interruption means include a primary heating-system-controller input element (24) for receiving a primary heating- x system activation signal and a primary heating-system deactivation signal from the primary heating-system-controller (26).

2. A secondary heating-system-controller (10) as claimed in claim 1, wherein the primary heating-system-controller input element (24) is an intercept input for directly receiving the primary heating-system activation signal and the primary heating-system deactivation signal from the primary heating-system-controller (26).

3. A secondary heating-system-controller (10) as claimed in claim 1 or claim 2, further comprising a support (36) for supporting the primary heating-system-controller (26), the support (36) including the primary heating-system-controller input element (24).

4. A secondary heating-system-controller (10) as claimed in any one of claims 1 to 3, further comprising a housing (12) in or on which is provided the interruption means, the primary heating-system controller being connectable to the housing (12).

5. A secondary heating-system-controller (10) as claimed in any one of the preceding claims, further comprising a mounting plate (42) on which the interruption means is mountable.

6. A secondary heating-system-controller (10) as claimed any one of the preceding claims, further comprising a wireless transmitter for wireless communication with a heating system.

7. A secondary heating-system-controller (10) as claimed any one of the preceding claims, further comprising a wireless receiver for wireless communication with the primary heating-system-controller (26).

8. A secondary heating-system-controller (10) as claimed any one of the preceding claims, further comprising a supplementary controller for overriding a deactivation and/or reactivation condition of the secondary heating-system controller.

9. A secondary heating-system-controller (10) as claimed any one of the preceding claims, in the form of a kit of parts.

10. A secondary heating-system-controller (10) as claimed in any one of the preceding claims, in combination with a primary heating-system-controller of a heat supply unit supplying a heating system.

11. A combination as claimed in claim 10, wherein the secondary heating-system-controller (10) is mounted on the primary heating-system-controller (26).

12. A boiler for a heating system, the boiler comprising a secondary heating-system-controller (10) as claimed in claim 1 which is provided thereon or therein.

13. A boiler as claimed in claim 12, further comprising an onboard boiler controller, the secondary heating-system-controller (10) being integral with the boiler controller.

14. A method of reducing utility costs for a heating system by using a secondary heating-system-controller (10) as claimed in any one of the preceding claims, the method comprising the step of temperature-independently deactivating and reactivating the heat supply unit supplying a heating system a plurality of times using the interruption means (18, 20) during a standard activation period of the heat supply unit.

## Patentansprüche

1. Sekundärer Heizsystemregler (10) zur Verwendung in Verbindung mit einem primären Heizsystemregler (26) einer ein Heizsystem versorgenden Wärmeversorgungseinheit, wobei der sekundäre Heizsystemregler (10) umfasst: Unterbrechungsvorrichtungen (18,20) zum periodischen Abschalten und Wiedereinschalten der Wärmeversorgungseinheit, welche das Heizsystem während einer Einschaltdauer der Wärmeversorgungseinheit versorgt, bestimmt durch den primären Heizsystemregler (26), wobei die Unterbrechungsvorrichtungen zum Einschalten und Abschalten der Wärmeversorgungseinheit dienen und einen Zeitgeber (20) zum Ausgeben von Taktsignalen für eine Einschaltdauer und Abschaltdauer einschließen, sowie eine Anwender-Interface, die für einen Benutzer als Schnittstelle mit dem Zeitgeber (20) dient, um die Einschaltdauer und Abschaltdauer einzustellen,
**dadurch gekennzeichnet, dass** die Unterbrechungsvorrichtungen (18,20) für das zeitunabhängige periodische Abschalten und Wiedereinschalten der Wärmeversorgungseinheit dienen, die das Heizsystem während einer Einschaltdauer der Wärmeversorgungseinheit versorgt, bestimmt durch den primären Heizsystemregler (26),
und **dadurch gekennzeichnet, dass** die Unterbrechungsvorrichtungen einen Regelkreis (18) zum Einschalten und Abschalten der Wärmeversorgungseinheit einschließen, wobei der Zeitgeber (20) zum Ausgeben der Taktsignale an den Regelkreis (18) dient,
und **dadurch gekennzeichnet, dass** die Unterbrechungsvorrichtungen einschließen: ein Eingabeglied (24) des primären Heizsystemreglers zum Empfangen eines primären Heizsystem-Einschaltsignals und eines primären Heizsystem-Ausschaltsignals von dem primären Heizsystemregler (26).

2. Sekundärer Heizsystemregler (10) nach Anspruch 1, wobei das Eingabeglied (24) des primären Heizsystemreglers ein Halteeingang zum direkten Empfangen des primären Heizsystem-Einschaltsignals und des primären Heizsystem-Ausschaltsignals von dem primären Heizsystemregler (26) ist.

3. Sekundärer Heizsystemregler (10) nach Anspruch 1 oder 2, ferner umfassend eine Halterung (36) zum Halten des primären Heizsystemreglers (26), wobei die Halterung (36) das Eingabeglied (24) des primären Heizsystemreglers einschließt.

4. Sekundärer Heizsystemregler (10) nach einem der Ansprüche 1 bis 3, ferner umfassend ein Gehäuse (12), in oder auf dem die Unterbrechungsvorrichtungen vorgesehen sind, wobei der primäre Heizsystemregler mit dem Gehäuse (12) verbindungsfähig ist.

5. Sekundärer Heizsystemregler (10) nach einem der vorgenannten Ansprüche, ferner umfassend eine Montageplatte (42), auf der die Unterbrechungsvorrichtung aufgebaut werden kann.

6. Sekundärer Heizsystemregler (10) nach einem der vorgenannten Ansprüche, ferner umfassend einen drahtlosen Sender zur drahtlosen Kommunikation mit einem Heizsystem.

7. Sekundärer Heizsystemregler (10) nach einem der vorgenannten Ansprüche, ferner umfassend einen drahtlosen Empfänger zur drahtlosen Kommunikation mit dem primären Heizsystemregler (26).

8. Sekundärer Heizsystemregler (10) nach einem der vorgenannten Ansprüche, ferner umfassend einen Zusatzregler zum Übersteuern einer Abschalt- und/oder Wiedereinschaltbedingung des sekundären Heizsystemreglers.

9. Sekundärer Heizsystemregler (10) nach einem der vorgenannten Ansprüche in Form eines Kits von Teilen.

10. Sekundärer Heizsystemregler (10) nach einem der vorgenannten Ansprüche in Kombination mit einem primären Heizsystemregler einer ein Heizsystem versorgenden Wärmeversorgungseinheit.

11. Kombination nach Anspruch 10, wobei der sekundäre Heizsystemregler (10) auf dem primären Heizsystemregler (26) aufgebaut ist.

12. Kessel für ein Heizsystem, wobei der Kessel einen sekundären Heizsystemregler (10) nach Anspruch 1 aufweist, der darauf oder darin vorgesehen ist.

13. Kessel nach Anspruch 12, ferner umfassend einen Onboard-Kesselregler, wobei der sekundäre Heizsystemregler (10) mit dem Kesselregler integriert ist.

14. Verfahren zum Verringern der Betriebskosten für ein Heizsystem durch Verwendung eines sekundären Heizsystemreglers (10) nach einem der vorgenannten Ansprüche, wobei das Verfahren den Schritt des temperaturunabhängigen Abschaltens und Wiedereinschaltens der das Heizsystem versorgenden Wärmeversorgungseinheit zu vielmaligen Zeitpunkten umfasst, indem während einer Standard-Einschaltperiode der Wärmeversorgungseinheit die Unterbrechungsvorrichtungen (18,20) angewendet werden.

## Revendications

1. Dispositif de commande de système de chauffage secondaire (10) destiné à être utilisé en conjonction avec un dispositif de commande de système de chauffage primaire (26) d'une unité d'alimentation en chaleur alimentant un système de chauffage, dans lequel le dispositif de commande de système de chauffage secondaire (10) comprend des moyens d'interruption (18, 20) destinés à désactiver et réactiver périodiquement l'unité d'alimentation en chaleur alimentant le système de chauffage pendant une période d'activation de l'unité d'alimentation en chaleur déterminée par le dispositif de commande de système de chauffage primaire (26), les moyens d'interruption étant destinés à activer et désactiver l'unité d'alimentation en chaleur et comprenant une minuterie (20) destinée à émettre des signaux de temporisation pour une période d'activation et une période de désactivation, et une interface d'utilisateur faisant interface avec la minuterie (20) pour qu'un utilisateur puisse régler la période d'activation et la période de désactivation, les moyens d'interruption (18, 20) étant destinés à désactiver et réactiver, périodiquement et indépendamment de la température, l'unité d'alimentation en chaleur alimentant le système de chauffage pendant une période d'activation de l'unité d'alimentation en chaleur déterminée par le dispositif de commande de système de chauffage primaire (26),
et en ce que les moyens d'interruption comprennent un circuit de commande (18) destiné à activer et désactiver l'unité d'essai, la minuterie (20) étant destinée à délivrer les signaux de temporisation au circuit de commande (18), et en ce que les moyens d'interruption comprennent un élément d'entrée de dispositif de commande de système de chauffage primaire (24) destiné à recevoir un signal d'activation de système de chauffage primaire et un signal de désactivation de système de chauffage primaire en provenance du dispositif de commande de système de chauffage primaire (26).

2. Dispositif de commande de système de chauffage secondaire (10) selon la revendication 1, dans lequel l'élément d'entrée de dispositif de commande de système de chauffage primaire (24) est une entrée d'interception destinée à recevoir directement le signal d'activation de système de chauffage primaire et le signal de désactivation de système de chauffage primaire en provenance du dispositif de commande de système de chauffage primaire (26).

3. Dispositif de commande de système de chauffage secondaire (10) selon la revendication 1 ou la revendication 2, comprenant en outre un support (36) destiné à supporter le dispositif de commande de système de chauffage primaire (26), le support (36) comprenant l'élément d'entrée de dispositif de commande de système de chauffage primaire (24).

4. Dispositif de commande de système de chauffage secondaire (10) selon l'une quelconque des revendications 1 à 3, comprenant en outre un boîtier (12), dans ou sur lequel est prévu le moyen d'interruption, le dispositif de commande de système de chauffage primaire pouvant être raccordé au boîtier (12).

5. Dispositif de commande de système de chauffage secondaire (10) selon l'une quelconque des revendications précédentes, comprenant en outre une plaque de montage (42) sur laquelle peut être monté le moyen d'interruption.

6. Dispositif de commande de système de chauffage secondaire (10) selon l'une quelconque des revendications précédentes, comprenant en outre un émetteur sans fil destiné à communiquer sans fil avec un système de chauffage.

7. Dispositif de commande de système de chauffage secondaire (10) selon l'une quelconque des revendications précédentes, comprenant en outre un récepteur sans fil destiné à communiquer sans fil avec le dispositif de commande de système de chauffage primaire (26).

8. Dispositif de commande de système de chauffage secondaire (10) selon l'une quelconque des revendications précédentes, comprenant en outre un dispositif de commande supplémentaire destiné à contourner un état de désactivation et/ou de réactivation du dispositif de commande de système de chauffage secondaire.

9. Dispositif de commande de système de chauffage secondaire (10) selon l'une quelconque des revendications précédentes, sous la forme d'un kit de pièces.

10. Dispositif de commande de système de chauffage secondaire (10) selon l'une quelconque des revendications précédentes, en combinaison avec un dispositif de commande de système de chauffage primaire d'une unité d'alimentation en chaleur alimentant un système de chauffage.

11. Combinaison selon la revendication 10, dans laquelle le dispositif de commande de système de chauffage secondaire (10) est monté sur le dispositif de commande de système de chauffage primaire (26).

12. Chaudière pour système de chauffage, la chaudière comprenant un dispositif de commande de système de chauffage secondaire (10) selon la revendication 1, lequel est prévu sur ou dans celle-ci.

13. Chaudière selon la revendication 12, comprenant en outre un dispositif de commande de chaudière intégré, le dispositif de commande de système de chauffage secondaire (10) étant intégré dans le dispositif de commande de chaudière.

14. Procédé de réduction des coûts des installations pour un système de chauffage à l'aide dispositif de commande de système de chauffage secondaire (10) selon l'une quelconque des revendications précédentes, le procédé comprenant l'étape de désactivation et de réactivation de l'unité d'alimentation en chaleur alimentant un système de chauffage, indépendamment de la température, plusieurs fois à l'aide des moyens d'interruption (18, 20) pendant une période d'activation standard de l'unité d'alimentation en chaleur.
